# EUROPEAN PATENT SPECIFICATION

(11) **EP 1 667 178 B1**
(45) Date of publication and mention of the grant of the patent: **08.10.2008**
(21) Application number: 05026466.2
(22) Date of filing: 05.12.2005
(51) Int. Cl.: H01G 9/07, C25D 11/26

(54) **Method for anodizing valve metals with a controlled power supply and anodized valve metal structure**
Verfahren zur Anodisierung von Ventilmetallen mit einer gesteuerten Leistungsversorgung und anodisierte Ventilmetallstruktur
Méthode d'anodisation de métaux de valve par une alimentation contrôlée et structure en métal de valve

(30) Priority: 06.12.2004 US 633624 P
(43) Date of publication of application: 07.06.2006
(73) Proprietor: Greatbatch, Inc., Clarence, NY 14031 (US)
(72) Inventor: Muffoletto, Barry, Alden New York 14004 NY (US); Goad, David, Buffalo New York 14213 NY (US); Nesselbeck, Neal, Lockport New York 14094 NY (US); Shah, Ashish, East Amherst New York 14051 NY (US); Spaulding, Joseph, Williamsville New York 14221 NY (US); Kaforey, Monica, Orchard Park New York 14127 NY (US); Scheuer, Christina, Amherst New York 1428 NY (US); Liu, Yanming, Clarence Centre New York 14032 NY (US)
(74) Representative: Duckett, Anthony Joseph

(56) References cited:
- US-A- 4 026 781
- US-A- 4 478 689
- US-A- 4 517 059
- US-A- 4 839 002
- US-A1- 2004 182 717
- US-B1- 6 231 993
- US-B2- 6 802 951

## Description

### Background of the invention

In general, an electrolytic capacitor comprises an anode, a cathode and a separator material. The separator material separates the anode and the cathode. Impregnated in the separator material is an lonlcain conductive electrolyte. The electrolyte typically comprises water, organic solvent(s), and salt(s) of weak inorganic and/or organic acids.

The anode is a valve metal. Valve metals include and are not limited to aluminum, tantalum, niobium, titanium, zirconium, hafnium and alloys thereof. The valve metals can be in any conventional form. Examples of such forms include and are not limited to etched foil, sintered powders, or other porous structure forms. As an anode, the valve metal has its exterior surface coated with a film of its corresponding oxide to serve as a dielectric.

The oxide film is formed by anodizing the valve metals in an appropriate anodizing electrolyte. The oxide film thickness increases in accordance with the anodizing voltage applied to it during the anodization process. The desired oxide film thickness is determined by numerous factors. Some of those factors include and are not limited to the capacitor working voltage, operating temperature and other performance requirements.

The maximum anodizing voltage and the quality of the oxide formed depend on the valve metal material, the anodizing electrolyte composition, and the anodizing protocol. The anodizing protocol refers to a series of voltage/current sequences and profiles.

It is believed the anodization protocols that promote locally excessive heating and insufficient material transport in porous valve metal anode bodies cause breakdown during anodization or poor anode electrical properties. The poor anode electrical properties include high DC leakage. There have been numerous attempts to solve these problems by altering the anodization protocol. Some of the prior anodization protocols that have been historically used and disclosed in recent patents include: controlling the anodizing current density; mechanical, sonic, or ultrasonic agitation of the electrolyte; anodizing by combining control of voltage/current and controlled rest steps (U.S. Patent No. 6,231,993 to Stephenson et al.); and controlled pulses of the voitage/current (U.S. Patent No. 6,802,951 to Hossick-Schott),

Figure 1 illustrates an example of a prior anodization protocol that is disclosed in U.S. Patent No. 6,802,951. In Figure 1, the current (2) is maintained and the power (4) Increases over time. The anodizing protocol described in the '951 patent is adequate for low voltage anodization because there are few oxide defects, gray-outs, and early anodizing breakdown is generally not a problem. The same results are not always obtainable for high voltage anodization protocols, High voltage anodization is when the anodizing voltage increases to over 200 volts during the course of the anodization protocol. During a high voltage anodization protocol, temperature in the porous valve metal anode increases. The locally excessive temperature promotes oxide defects, gray-out, and early anodizing breakdown in the anodes. Such results are undesirable.

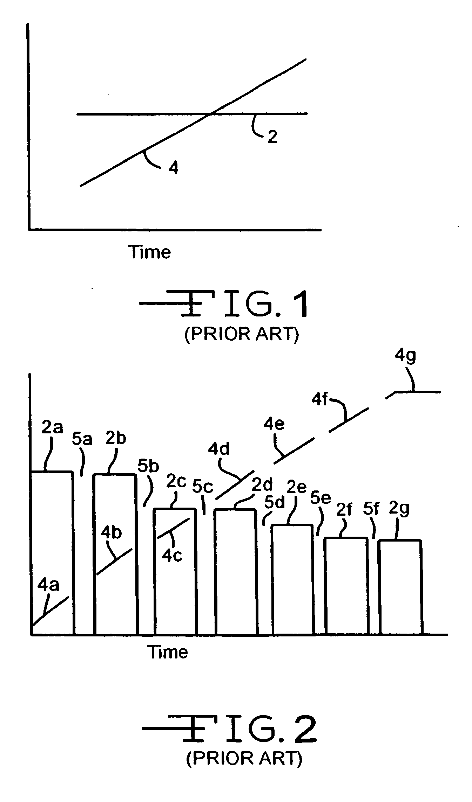

Another anodization protocol that is an obvious variation of Figure 1 is also disclosed in the 951 patent. In the '951 patent, Hossick-Schott disclosed and claimed an anodization protocol having (1) the voltage rise to a predetermined level; (2) when the voltage rises the current remains constant, (3) when the voltage reaches a predetermined level the current decreases; and (4) when the current and/or voltage are rising, being maintained or decreasing, the electrolyte composition is agitated.

What has been needed is another method for manufacturing a valve metal anode such as the kind typically used in an electrolytic capacitor. Particularly, it is desirable to provide valve metal anodes with dielectric coatings having improved oxide quality and high breakdown voltages.

An alternative anodization (formation) protocol for high voltage sintered tantalum anodes is disclosed by Stephenson et al. in U.S. Patent No. 6,231,993. The '993 patent is assigned to Wilson Greatbatch Ltd., the assignee for this application. Stephenson et al. disclose (bracketed material added for clarity) the following anodization protocol, which is partially illustrated in Figure 2:

An exemplary formation protocol for a sodium reduced tantalum powder pellet is as follows. Exemplary sodium reduction tantalum pellets are available from H.C. Starck Inc., Newton, Mass. under the "NH" family designation. In this exemplary protocol, the pellet has a weight of about eight grams and the desired target formation voltage is 231 volts. The formation electrolyte is of polyethylene glycol, de-ionized water and H₃PO₄ having a conductivity of about 2,500 *µ*S[/cm] to about 2,600 *µ*S[/cm] at 40°C. The formation protocol Is as follows:
1. The power supply is turned on at an initial current [2a] of 80 mA until the voltage [4a] reached 75 volts. The power supply is then turned off [5a] for about three hours.
2. The power supply is turned back on [with the current 2b set] at 80 mA, [and the voltage 4b which is initially at] 75 volts and [rises] to 115 volts. The power supply is then turned off [5b] for about three hours.
3. The power supply is turned back on [with the current 2c set] at 49 mA, [and the voltage 4c which is initially at] 115 volts and [rises] to 145 [volts]. The power supply is then turned off [5c] for about three hours.
4. The power supply is turned back on [with the current 2d set] at 49 mA, [and the voltage 4d which is initially set at] 145 volts and [rises] to 175 [volts]. The power supply is then turned off [5d] for about three hours.
5. The power supply is turned back on [with the current 2e set] at 40 mA, [and the voltage 4e which is initially set at] 175 volts and [rises] to 205 [volts]. The power supply is then turned off [5e] for about three hours.
6. The power supply is turned back on [with the current 2f set] at 36 mA, [and the voltage 4f which is initially set at] 205 volts and [rises] to 225 [volts]. The power supply is then turned off [5f] for three hours.
7. The power supply is turned back on [with the current 2g set] at 36 mA, [and the voltage 4g is which is initially set] at 205 volts and [rises] to 231 [volts]. The pellet is held at 231 volts for about one hour to complete the formation process. The anodized pellet is then rinsed and dried.

if desired, the formation process is periodically interrupted and the anodized pellet is subjected to a heat treatment step. This consists of removing the anode pellet from the anodization electrolyte bath. The anode pellet is then rinsed and dried followed by heat treatment according to the procedure described by D. M. Smyth et al., "Heat-Treatment of Anodic Oxide Films on Tantalum", journal of the Electrochemical Society, vol. 110, No. 12, pp. 1264-1271, December 1963.

The anodization protocol illustrated in Figure 2 controls the current and decreases the heat generated in comparison to the protocol illustrated in FIG. 1. By decreasing the heat, the Figure 2 anodization protocol obtains an anode having decreased DC leakage.

However, there is a desire to find alternative anodization protocols to obtain similar results in relation to the Figure 2 protocol, but that can be obtained at a faster rate.

### Summary of the Invention

The method according to the present invention is defined by the features of claim 1. The present invention is directed to an anodization protocol for valve metal structures. The anodization protocol calls for valve metal structures to be positioned in an anodizing electrolyte, and a supply system Is electrically interconnected to the valve metal structures. The supply system provides a source voltage, a source current, and a controlled power. The supply system can be any device that provides the controlled power. The anodizing protocol subjects the valve metal structure to (a) the source current, (b) the formation (source) voltage and (c) the controlled power level. The power is controlled to decrease excessive heating in the structure during anodization. An anodized valve metal structure is defined by the features of cl. 14..

The anodization protocol of the present invention provides acceptable anodizing voltage and oxide quality at a desired rate in relation to the prior art protocols.

### Brief Description of the Drawings

Figure 1 illustrates a representative sample of the anodizing protocol disclosed in many prior art references.
Figure 2 illustrates a representative sample of the anodizing protocol disclosed in U.S. Patent No. 6,231,993 to Stephenson et al.
Figure 3a illustrates an electrical schematic of the present invention.
Figure 3b Illustrates a flow chart of the supply system of the present invention.
Figures 4 to 13 illustrate different controlled power protocols of the present invention.
Figure 14 illustrates the source voltage and the source current during the anodization on-time period.

### Detailed Description of the Invention

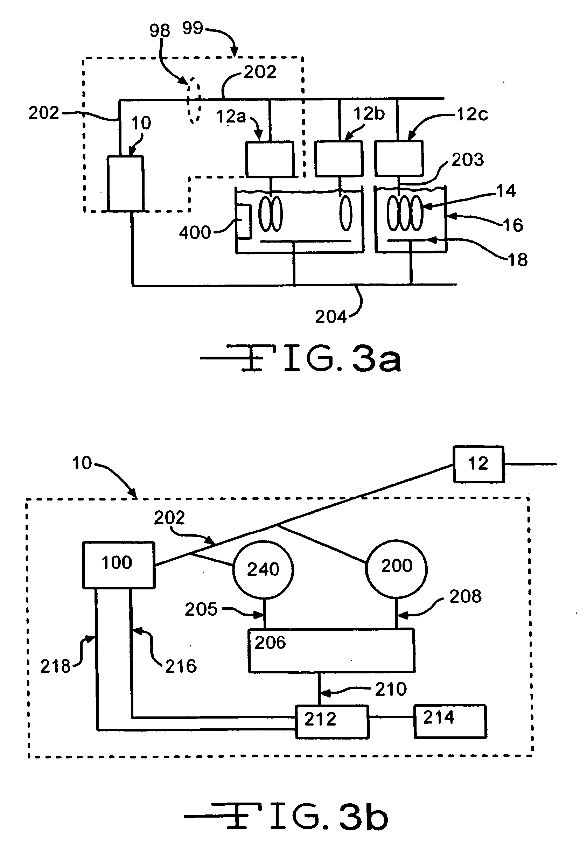

The present invention is directed to an anodization protocol for valve metals 14. Figure 3a illustrates some of the components used for the anodization protocol. The first component is a supply system 10. The supply system 10 provides controlled power, a source current and a source voltage. The controlled power, the source current and the source voltage are collectively referred to as "output". The supply system's 10 output traverses a first electrical conduit 202 to current limiting devices 12A, 12B and 12C. Each current limiting device can alter a portion of the supply system's 10 output if the current exceeds a predetermined current level. Each current limiting device 12A, 12B and 12C delivers an altered output, which may or may not be altered in relation to the output, through a second electrical conduit 203 to the anode(s) 14 associated with the respective current limiting device 12A, 12B and 12C. The anode(s) 14 are submerged in an anodizing electrolyte within a formation tank(s) 16, A cathode 18 is positioned in each formation tank 16 and receives a resulting output from the anode and/or the electrolyte. The cathode 18 directs the resulting output through a third electrical conduit 204 to the supply system 10.

This anodization protocol controls the power and current with or without brief interruptions. The anodization protocol offers the following advantages over the prior art: 1) controlled power throughout the course of anodizing to decrease and/or avoid excessive heating of the anode; 2) short anodizing time; and 3) smooth change in current and power that avoids disruptive changes in the current and voltage. The claimed anodization protocol also results in desired anode electrical properties. Those desired electrical properties include and are not limited to desired DC leakage, a stable shelf life, desired charge/discharge energy efficiency and capacitance, and desired stability during the anode's operating life. These properties are desired for critical applications. One such critical application is implantable cardioverter defibrillators.

### The Supply System 10 and the Output

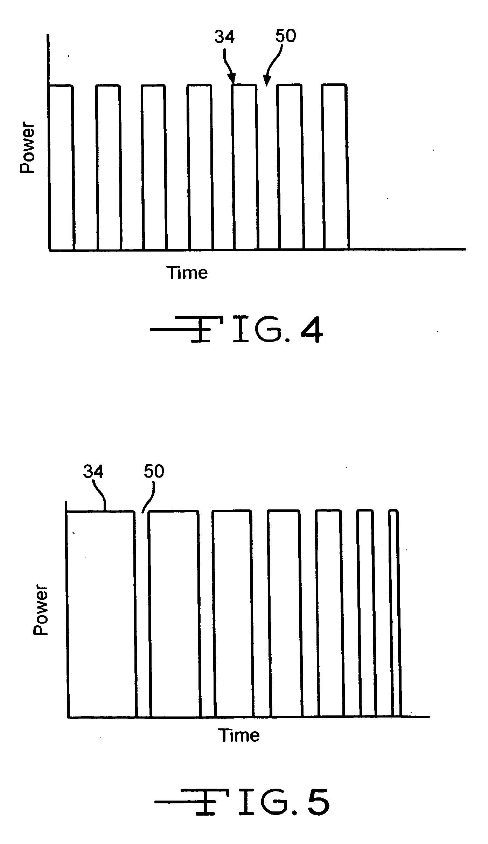

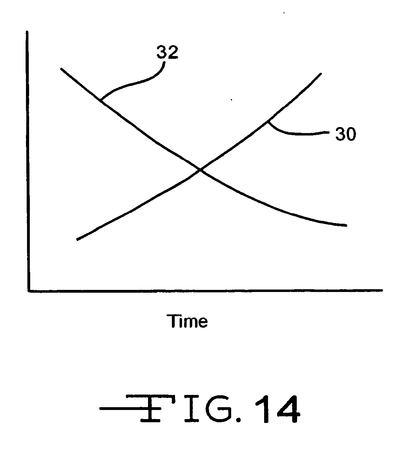

The voltage 30 applied to an anode increases with anodizing time, and the current 32 decreases at the same time, as illustrated in Figure 14. The power 34 (illustrated in Figures 4 to 13) received by an anode is controlled for a desired power level(s) at specific times: The desired power level(s) is designed not to overheat the valve metal 14 (illustrated in Figures 3a and 3b) and simultaneously obtain a desired DC leakage for the anode. This output control is smooth and does not interrupt the anodizing process. The control is accomplished through electronics that one of ordinary skill in the power fields can manufacture and conforms to the flow chart illustrated in Figure 3b.

The supply system 10 has a power control unit 100, a voltmeter 200, an ampmeter 240, a multiplier 206, and a difference unit 212. The voltmeter 200 measures the output's voltage that traverses the first conduit 202. The voltmeter 200 transmits the voltage measurement 208 to the multiplier 206.

The ampmeter 240 measures the current that traverses the first conduit 202. The ampmeter 240 transmits the current measurement 205 to the multiplier 206.

The multiplier 206 computes the measured power value 210. For example, the multiplier 206 may multiply the current measurement 205 and the voltage measurement 208 to obtain a measured power value 210. The multiplier 206 transmits the measured power value 210 to a difference unit 212.

The difference unit 212 (which could also be a part of the multiplier 206) also receives a desired power value 214. The desired power value 214 can be pre-programmed into the difference unit 212 or alternatively inputted by the user or any third party who desires to input the desired power value 214 for the anode 14.

The difference unit 212 compares the desired power value 214 to the measured power value 210. If the difference unit 212 calculates that the difference between the desired power value 214 and the measured power value 210 is not zero, the difference unit 212 transmits a first signal 216 to the power control unit 100. In response to the first signal 216, the power control unit 100 adjusts the power control unit's output 202 by adjusting the current and/or the voltage so the difference between the desired power value 214 and the measured power value 210 equals or is adjusted toward zero.

Alternatively if the difference unit 212 calculates that the difference between the desired power value 214 and the measured power value 210 is zero, the difference unit 212 transmits a second signal 218 to the power control unit 100. The second signal 218 instructs the power control unit not to alter the power supply output in conduit 202. It is doubtful the second signal 218 will ever be used since the power supply output in conduit 202 is normally constantly changing to obtain the desired power value. Additionally, the second signal 218 may not even be a transmitted signal.

### Other Components

The current limiting devices 12A, 12B and 12C receive the output from the electrical conduit 202. The current limiting devices are designed to ensure the current that is eventually transmitted to the anodes does not exceed a predetermined value. The current limiting devices can be a resistor, a fuse, or any other type of device that can limit the current. If the current limiting device limits the current passing through it or allows the current to pass through it without altering the current, the current limiting device 12A, 12B and 12C transmits what is referred to as the altered output through the second conduit 203. The specific limitation of the current varies depending on the desired anode properties.

The valve metal material 14 receives the altered output from the second conduit 203. As illustrated in Figure 3a, there can be one or more (preferably one) valve metal anode(s) interconnected to the second conduit 203 extending from each current limiting device 12A, 12B and 12C. Each valve metal anode 14 and/or set of anodes 14 is positioned within the formation tank (16). There can be one or more formation tanks 16 in the anodization protocol, Each tank 16 contains an anodizing electrolyte.

The anodizing (formation) electrolyte can be any conventional anodizing electrolyte. Examples of effective anodizing electrolytes are disclosed in commoniy assigned U.S. Patent No. 6,231,993 to Stephenson et al., which is Incorporated herein by reference. In particular, the electrolyte can be an aqueous solution of ethylene glycol or an aqueous solution of polyethylene glycol and H₃PO₄. An exemplary formation electrolyte can comprise 10-80 volume percent polyethylene glycol (PEG400) plus 0.1-10 volume percent H₃PO₄ and de-ionized water having a conductivity of about 10 µS/cm to about 50,000 µS/cm at 40°C. Alternatively, other electrolyte compositions can be used that are designed to obtain desired anode properties.

The cathode 18 is positioned in each tank 16. The cathode 18 returns the resulting output to the supply system 10. The resulting output is the current, voltage and power applied to the anode and/or the electrolyte.

For better oxide quality, the anodization protocol may incorporate a timing mechanism 98 within a circuitry area 99. The circuitry area 99 is the area between and/or including the supply system 10 and the valve metal 14 - but not including the valve metal itself. The timing mechanism 98 provides a rest time 50 during the anodization protocol in which the anode 14 is not subject to any controlled power, current or voltage, as illustrated in Figures 4 to 13. The rest time 50 can be obtained by the timing mechanism turning on and off a switch, not shown, along the conduit(s) that transports the current, voltage and power to the anodes 14,

The "on-times" (when the anode 14 receives the desired power, current and voltage) and "off-times" can range from seconds to hours. The on-times and off-times can be the same or different, preferably the off-times are shorter than the on-times. The on-times and the off-times can be fixed or varied during the course of anodizing.

Alternatively, the anodes can be anodized continuously. That means the anodizing protocol has no rest or off-time throughout the entire anodization protocol.

The anodizing methods of the present Invention apply to all valve metals for electrolytic capacitor anodes. The valve metal anodes Include and are not limited to etched foils, pressed and sintered powder bodies, or other forms of porous structures. The anodizing methods of the present invention are particularly useful for anodizing large and high voltage sintered powder anodes. Such anodes are used In tantalum electrolytic capacitors.

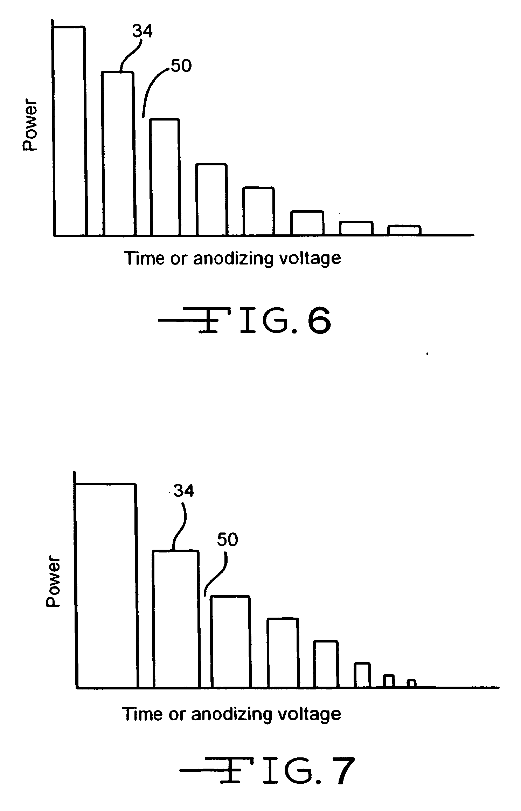

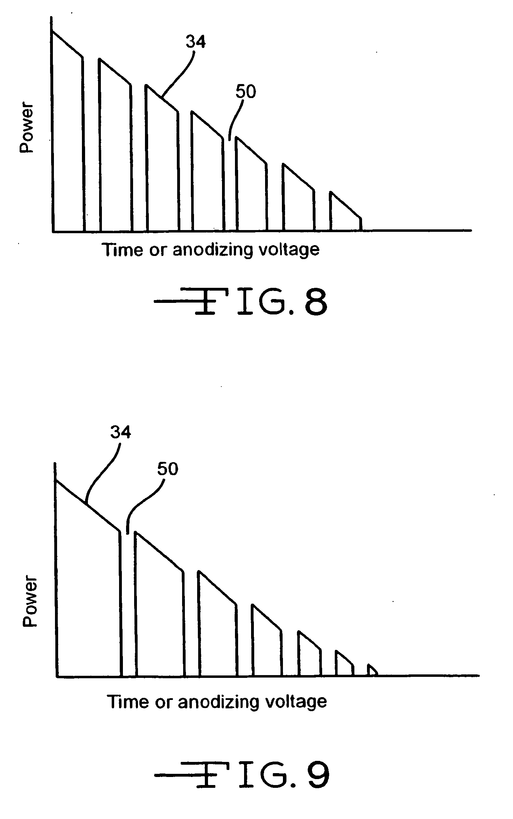

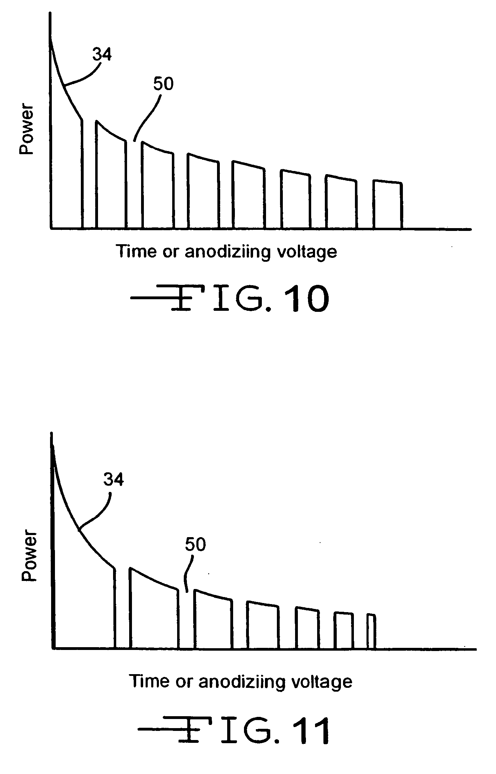

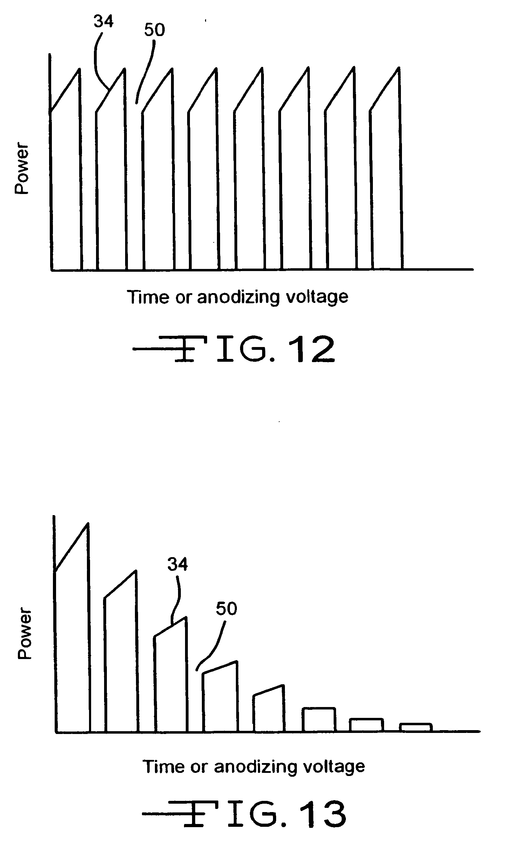

Figures 4 to 13 illustrate some examples of the anodizing protocols of the present invention. The x-axis in the figures can be time or voltage. The controlled power 34 can also be applied to the anode within the following protocol to obtain the desired decreased DC leakage:
a) Constant power 34 anodizing with constant on-times and off-times 50 at a set power value, as illustrated in Figure 4.
b) Constant power 34 anodizing with varied on-time and constant off-times 50, as shown in Figure 5.
c) Constant power 34 within each pulse, varied power between pulses with constant on-times and off-times 50, as exemplified in Figure 6.
d) Constant power 34 within each pulse, varied power between pulses, varied on-time and constant off-times 50, as illustrated in Figure 7.
e) Linearly varied power 34 within each pulse and between pulses, and constant on-times and off-times 50, as shown in Figure 8.
f) Linearly varied power 34 with each pulse and between pulses, varied on-time, and constant off-times 50, as illustrated in Figure 9.
g) Non-linearly varied power 34 within each pulse and between pulses, constant on-times and off-times 50, as illustrated in Figure 10.
h) Non-linearly varied power 34 within each pulse and between pulses, varied on-time, and constant off-times 50, as shown in Figure 11.
i) Varied (increased) power 34 within each pulse, constant peak power, and constant on-time and off-times 50, as exemplified in Figure 12.
j) Varied (increased) power 34 within each pulse, varied (increased) peak power, and constant on-time and off-times 50, as shown in Figure 13.

The valve metals formed in accordance to the present Invention are for anodes able to handle more than 200 volts without "gray-out" or significant breakdown during anodization, and acceptable anode electrical properties.

To improve electrolyte and heat transport from the anode to the bulk electrolyte, the electrolyte can be agitated during the anodizing. The agitation can be created by any conventional agitation device 400. Examples of agitation devices 400 include: mechanical stirrers, ultrasonic agitation devices or subsonic agitation devices, and moving the anodes. All of these agitation devices and methods are known to those of ordinary skill in the art.

### Example

The anodization protocol of the present invention was compared to a variation of the anodization protocol described by Stephenson et al. in U.S. Patent No. 6,231,993. The valve metal pellets were taken from the same lot of Greatbatch, Inc,'s regular production line and had similar weights - averaged 7.3 grams. The electrolyte was 15% PEG400 and 85% water with a sufficient amount of phosphoric acid added to provide a conductivity of 2550 µS/cm at 40°C. Each pellet was positioned within a formation tank that could contain 300 ml of electrolyte, and were maintained at 40°C.

For this example, the anodes were formed to 240 volts in accordance to the two protocols.

### Prior Art Anodization Protocol:

A. 150 mA to 75 volts, then 1 hour rest;
B. 1 50 mA to 115 volts, then 1 hour rest;
C. 94 mA to 145 volts, then 1 hour rest;
D. 94 mA to 175 volts, then 1 hour rest;
E. 74 mA to 205 volts, then 1 hour rest;
F. 66 mA to 225 volts, then 1 hour rest;
G. 66 mA to 235 volts, then 1 hour rest; and
H. 66 mA to 240 volts,

The prior art anodization protocol took 28.25 hours, and the anode's DC leakage was 0.91 nA/µFV.

Present Invention Anodization Protocol

The anodization protocol used in this example is referred to as the 17 watt constant power pulse protocol. That protocol has a pulse limited to a maximum power of 17 watts and a maximum current of 1 50 mA. The power-on period was for 50 seconds, and the power-off period was for 10 seconds. No additional rests were taken.

The resulting anode was formed in 22.8 hours and the anode's DC leakage was 0.92 nA/µFV.

## Claims

1. A method for anodizing a valve metal structure to form a valve metal anode at a target formation voltage, which comprises the steps of:
a) providing the valve metal structure in an anodizing electrolyte;
b) providing a power supply that generates an output power from a source voltage and a source current;
c) subjecting the valve metal structure to the output power; and **characterised by** the step
d) maintaining the output power substantially constant or decreasing by decreasing the current as the voltage applied to the valve metal structure increases during a time interval in which the formation voltage increases toward the target formation voltage from a first formation voltage to a second, greater formation voltage to thereby form the valve metal structure into the valve metal anode.

2. The method of Claim 1 which includes turning off the power supply for a predetermined time between successive time intervals of the valve metal structure being subjected to the output power.

3. The method of Claim 1 which includes continuously applying the current and the voltage to the valve metal structure from the first formation voltage being at the beginning of anodization to the second formation voltage being at the target formation voltage.

4. The method of Claim 1 which further comprises the step of turning off the current and holding the voltage for a period of time sufficient to allow the anodizing electrolyte to diffuse from the valve metal structure.

5. The method of any one of the preceding claims which includes providing the electrolyte having a conductivity of about 10 µS/cm to about 50,000 µS/cm at 40°C.

6. The method of any one of the preceding claims wherein the anodizing electrolyte comprises an aqueous solution of ethylene glycol or an aqueous solution of polyethylene glycol and H₃PO₄.

7. The method of any one of the preceding claims which includes selecting the valve metal from the group consisting of tantalum, aluminum, niobium, titanium, zirconium, hafnium, and alloys thereof.

8. The method of Claim 1 which includes pulsing the output power.

9. The method of any one of the preceding claims which includes forming the anode to over 200 volts.

10. The method of Claim 1 including providing the output power at below 50 Watts, suitably below 30 Watts, preferably below 10 Watts.

11. The method of any one of the preceding claims which includes agitating the anodizing electrolyte.

12. The method of any one of the preceding claims which further includes the step of limiting the current applied to the valve metal structure.

13. The method of Claim 1 which includes adjusting the output power by (a) measuring the source voltage and the source current to calculate a measured power level, (b) comparing the measured power level to a desired power level and (c) adjusting the source voltage and the source current so that the measured output power is at or near the desired power level.

14. An anodized valve metal structure preparable by anodizing a valve metal structure in an electrolyte to a target formation voltage by an anodization protocol that subjects the valve metal structure to an output power from a power supply that is substantially constant or decreasing by decreasing the current as the voltage applied to the valve metal structure increases during a time interval in which the formation voltage increases toward the target formation voltage from a first formation voltage to a second, greater formation voltage.

15. An anodized valve metal structure according to Claim 14 wherein the anodizing is in accordance with the method of any one of the preceding claims.

## Patentansprüche

1. Verfahren zum Eloxieren einer Ventilmetall-Struktur, um eine Ventilmetall-Anode an einer Ziel-Formationsspannung zu bilden, wobei das Verfahren die folgenden Schritte umfasst:
a) Bereitstellen der Ventilmetall-Struktur in einem Eloxier-Elektrolyten;
b) Bereitstellen einer Leistungsversorgung, die eine Ausgangsleistung von einer Quellspannung und einem Quellstrom erzeugt;
c) Unterwerfen der Ventilmetall-Struktur der Ausgangsleistung; und **gekennzeichnet ist durch** den Schritt:
d) Halten der Ausgangsleistung im Wesentlichen konstant oder Verringern der Ausgangsleistung **durch** Verringern des Stroms, während die an die Ventilmetall-Struktur angelegte Spannung während eines Zeitintervalls ansteigt, in dem die Formationsspannung zu der Ziel-Formationsspannung von einer ersten Formationsspannung zu einer zweiten, größeren Formationsspannung ansteigt, um **dadurch** die Ventilmetall-Struktur in der Ventilmetall-Anode zu bilden.

2. Verfahren nach Anspruch 1, das das Abschalten der Leistungsversorgung für einen vorgegebenen Zeitraum zwischen aufeinander folgenden Zeitintervallen umfasst, in denen die Ventilmetall-Struktur der Ausgangsleitung unterworfen ist.

3. Verfahren nach Anspruch 1, das das kontinuierliche Anlegen des Stroms und der Spannung an die Ventilmetall-Struktur von der ersten Formationsspannung am Anfang des Eloxierens zu der zweiten Formationsspannung an der Ziel-Formationsspannung umfasst.

4. Verfahren nach Anspruch 1, das des Weiteren den Schritt des Abschaltens des Stroms und des Haltens der Spannung für einen Zeitraum umfasst, der ausreicht, um es dem Eloxier-Elektrolyten zu ermöglichen, aus der Ventilmetall-Struktur zu diffundieren.

5. Verfahren nach einem der vorhergehenden Ansprüche, das das Bereitstellen des Elektrolyten mit einer Leitfähigkeit von ca. 10 µS/cm bis ca. 50.000 µS/cm bei 40°C umfasst.

6. Verfahren nach einem der vorhergehenden Ansprüche, wobei der Eloxier-Elektrolyt eine wässrige Lösung aus Ethylenglykol oder eine wässrige Lösung aus Polyethylenglykol und H₃PO₄ aufweist.

7. Verfahren nach einem der vorhergehenden Ansprüche, das das Auswählen des Ventilmetalls aus der Gruppe bestehend aus Tantal, Aluminium, Niob, Titan, Zirkonium, Hafnium und deren Legierungen umfasst.

8. Verfahren nach Anspruch 1, das das Pulsen der Ausgangsleitung umfasst.

9. Verfahren nach einem der vorhergehenden Ansprüche, das das Ausbilden der Anode auf über 200 Volt umfasst.

10. Verfahren nach Anspruch 1, das das Bereitstellen der Ausgangsleitung bei unter 50 Watt, geeignet unter 30 Watt, bevorzugt unter 10 Watt umfasst.

11. Verfahren nach einem der vorhergehenden Ansprüche, das das Erregen des Eloxier-Elektrolyten umfasst.

12. Verfahren nach einem der vorhergehenden Ansprüche, das des Weiteren den Schritt des Begrenzens des an die Ventilmetall-Struktur angelegten Stroms umfasst.

13. Verfahren nach Anspruch 1, das das Einstellen der Ausgangsleistung umfasst durch (a) Messen der Quellspannung und des Quellstroms, um einen gemessenen Leistungspegel zu berechnen, (b) Vergleichen des gemessenen Leistungspegels mit einem gewünschten Leistungspegel und (c) Einstellen der Quellspannung und des Quellstroms, so dass die gemessene Ausgangsleistung sich an oder nahe dem gewünschten Leistungspegel befindet.

14. Eloxierte Ventilmetall-Struktur, die durch Eloxieren einer Ventilmetall-Struktur in einem Elektrolyten auf eine Ziel-Formationsspannung durch ein Eloxierprotokoll hergestellt werden kann, das die Ventilmetall-Struktur einer Ausgangsleistung von einer Leistungsversorgung unterwirft, die im Wesentlichen konstant ist oder sich verringert durch Verringern des Stroms, während die an die Ventilmetall-Struktur angelegte Spannung während eines Zeitintervalls ansteigt, in dem die Formationsspannung zu der Ziel-Formationsspannung von einer ersten Formationsspannung zu einer zweiten, größeren Formationsspannung ansteigt.

15. Eloxierte Ventilmetall-Struktur nach Anspruch 14, wobei das Eloxieren gemäß dem Verfahren nach einem der vorhergehenden Ansprüche durchgeführt wird.

## Revendications

1. Procédé d'anodisation d'une structure métallique de valve pour former une anode métallique de valve à une tension de formation cible, qui comprend les étapes consistant à :
a) disposer la structure métallique de valve dans un électrolyte d'anodisation ;
b) prévoir une source d'alimentation qui génère une puissance de sortie à partir d'une tension source et d'un courant source ;
c) soumettre la structure métallique de valve à la puissance de sortie ; et
**caractérisé par** l'étape consistant à
d) maintenir la puissance de sortie sensiblement constante ou décroissante en diminuant le courant lorsque la tension appliquée sur la structure métallique de valve augmente pendant un intervalle de temps dans lequel la tension de formation augmente vers la tension de formation cible depuis une première tension de formation à une seconde tension de formation supérieure pour former ainsi la structure métallique de valve en l'anode métallique de valve.

2. Procédé selon la revendication 1, qui consiste à couper l'alimentation pendant un temps prédéterminé entre les intervalles de temps successifs où la structure métallique de valve est soumise à la puissance de sortie.

3. Procédé selon la revendication 1, qui consiste à appliquer en continu le courant et la tension à la structure métallique de valve de la première tension de formation au début de l'anodisation jusqu'à la seconde tension de formation se trouvant à la tension de formation cible.

4. Procédé selon la revendication 1, qui comprend en outre l'étape consistant à couper le courant et à maintenir la tension pendant une période de temps suffisante pour permettre à l'électrolyte d'anodisation de se diffuser à partir de la structure métallique de valve.

5. Procédé selon l'une quelconque des revendications précédentes, qui consiste à prévoir l'électrolyte ayant une conductivité d'environ 10 µS/cm à environ 50 000 µS/cm à 40 °C.

6. Procédé selon l'une quelconque des revendications précédentes, dans lequel l'électrolyte d'anodisation comprend une solution aqueuse d'éthylène glycol ou une solution aqueuse de polyéthylène glycol et de H₃PO₄.

7. Procédé selon l'une quelconque des revendications précédentes, qui consiste à sélectionner le métal de valve parmi le groupe comprenant le tantale, l'aluminium, le niobium, le titane, le zirconium, le hafnium et des alliages de ceux-ci.

8. Procédé selon la revendication 1, qui comprend l'étape consistant à pulser la puissance de sortie.

9. Procédé selon l'une quelconque des revendications précédentes, qui consiste à former l'anode à plus de 200 volts.

10. Procédé selon la revendication 1, consistant à fournir la puissance de sortie en dessous de 50 Watts, de façon appropriée en dessous de 30 Watts, de préférence, en dessous de 10 Watts.

11. Procédé selon l'une quelconque des revendications précédentes, qui consiste à agiter l'électrolyte d'anodisation.

12. Procédé selon l'une quelconque des revendications précédentes, qui comprend en outre l'étape consistant à limiter le courant appliqué à la structure métallique de valve.

13. Procédé selon la revendication 1, qui consiste à régler la puissance de sortie (a) en mesurant la tension source et le courant source pour calculer un niveau de puissance mesuré, (b) en comparant le niveau de puissance mesuré à un niveau de puissance souhaité et (c) en réglant la tension source et le courant source de sorte que la puissance de sortie mesurée soit au niveau de puissance souhaité ou proche de celui-ci.

14. Structure métallique de valve anodisée préparable en anodisant une structure métallique de valve dans un électrolyte à une tension de formation cible par un protocole d'anodisation qui soumet la structure métallique de valve à une puissance de sortie provenant d'une alimentation qui est sensiblement constante ou décroissante en diminuant le courant lorsque la tension appliquée à la structure métallique de valve augmente pendant un intervalle de temps dans lequel la tension de formation augmente vers la tension de formation cible depuis une première tension de formation jusqu'à une seconde tension de formation supérieure.

15. Structure métallique de valve anodisée selon la revendication 14, dans laquelle l'anodisation est conforme au procédé selon l'une quelconque des revendications précédentes.
